Europäisches Patentamt

European Patent Office

Office européen des brevets

(19)

(11) **EP 0 674 940 B1**

(12) **EUROPÄISCHE PATENTSCHRIFT**

(45) Veröffentlichungstag und Bekanntmachung des Hinweises auf die Patenterteilung:
**13.08.1997 Patentblatt 1997/33**

(51) Int. Cl.$^6$: **B01D 71/40**, B01D 61/36, C07C 29/76

(21) Anmeldenummer: **95104481.7**

(22) Anmeldetag: **27.03.1995**

(54) **Verwendung einer Membran für die Pervaporation oder die Dampfpermeation**

Use of a membrane for pervaporation or vapour permeation

Application d'une membrane pour la pervaporation ou la perméation de vapeurs

(84) Benannte Vertragsstaaten:
**BE CH DE DK FR GB IT LI NL SE**

(30) Priorität: **28.03.1994 DE 4410763**

(43) Veröffentlichungstag der Anmeldung:
**04.10.1995 Patentblatt 1995/40**

(73) Patentinhaber: **DEUTSCHE CARBONE AG 60437 Frankfurt (DE)**

(72) Erfinder:
 • **Brüschke, Hartmut E. A., Dr. D-69226 Nussloch (DE)**
 • **Steinhauser, Hermann A., Dr. D-88048 Friedrichshafen (DE)**

(74) Vertreter: **Dost, Wolfgang, Dr.rer.nat., Dipl.- Chem. et al Patent- und Rechtsanwälte Bardehle . Pagenberg . Dost . Altenburg . Frohwitter . Geissler & Partner Postfach 86 06 20 81633 München (DE)**

(56) Entgegenhaltungen:
EP-A- 0 074 191     EP-A- 0 232 442
US-A- 3 910 862     US-A- 4 877 529

 • **DATABASE WPI Section Ch, Week 8902 Derwent Publications Ltd., London, GB; Class A88, AN 89-013558 & JP-A-63 291 620 (MITSUBISHI RAYON KK) , 29.November 1988**
 • **PATENT ABSTRACTS OF JAPAN vol. 18 no. 219 (C-1192) ,20.April 1994 & JP-A-06 015146 (AGENCY OF IND SCIENCE & TECHNOL) 25.Januar 1994,**
 • **CHEMICAL ABSTRACTS, vol. 121, no. 20, 14.November 1994 Columbus, Ohio, US; abstract no. 232517u, YAMADA SUMIO 'Pervaporation of aqueous alcohol solutions with poly(methyl methacrylate-co-N,N-dimethylaminoethyl methacrylate) membranes' Seite 92; Spalte 2;**

**Beschreibung**

Die vorliegende Erfindung betrifft die Verwendung einer Membran und insbesondere einer Komposit-Membran, zur Abtrennung von einfachen Alkoholen, insbesondere von Äthanol, aus Mischungen mit anderen organischen Flüssigkeiten nach den Verfahren der Pervaporation und Dampfpermeation.

Es ist bekannt, daß einfache Alkohole wie Methanol, Äthanol und Propanol mit organischen Flüssigkeiten, z.B. flüssigen Kohlenwasserstoffen, Äthern, Ketonen, Estern, Aminen u.a. lückenlos mischbar sind. Es ist ferner bekannt, daß solche Mischungen durch Destillation häufig nur unter erheblichem Aufwand getrennt werden können, da azeotrope Mischungen auftreten. Bei diesen hat die flüssige Phase die gleiche Zusammensetzung wie der mit ihr in Gleichgewicht stehende Dampf, eine weitere destillative Trennung ist nicht möglich. Dem Fachmann ist bekannt, daß aus solchen Gemischen, auch bei azeotroper Zusammensetzung, der einfache Alkohol durch die Verfahren der Pervaporation und Dämpfepermeation abgetrennt werden kann.

In der US-A-4 774 365 ist ein Verfahren zur Abtrennung von Methanol aus seinen Mischungen mit Äthern und / oder Kohlenwasserstoffen, besonders aus Mischungen mit Methyl-tertiärbutyl-äther (MTBE) und mit Methyltertiär-amyl-äther (TAME) beschrieben, wobei eine Membran aus Celluloseacetat verwendet wird.

In der US 4 877 529 wird die Abtrennung von Methanol aus Mischungen mit MTBE und Dimethylcarbonat (DMC) beschrieben, die verwendeten Membranen haben Trennschichten aus Polyvinylalkohol (PVA) oder aus einem perfluorierten sauerer Ionenaustauscher, dessen seitenständige Säuregruppe durch quartäres Ammoniumsalz neutralisiert ist.

Die US 4 960 519 beschreibt die Abtrennung von Methanol aus MTBE und DMC, die verwendeten Membranen haben Trennschichten aus PVA und PVA-Polyacrylsäure-Mischungen.

In der US 5 066 403 wird die Abtrennung von Äthanol aus Cyclohexan beschrieben, die Membran besteht aus Polyperfluorosulfonsäure (Nafion®).

Nach der US 4 759 850 kann Methanol aus seinen Mischungen mit anderen organischen Flüssigkeit mittels Umgekehrter Osmose abgetrennt werden, wobei Membranen aus Celluloseazetat und aus Polyolefinen verwendet werden.

Die DE 4 234 521 beschreibt eine Membran mit einer durch Plasmapolymerisation hergestellten Trennschicht, die zur Abtrennung von Methanol aus seinen Mischungen mit anderen organischen Flüssigkeiten, z.B. MTBE und DMC, geeignet ist.

In der unter Art. 54(3) EPÜ fallenden EP-A-0 592 706 ist eine Membran aus Cellulosestern und Mischungen von Celluloseestern untereinander sowie mit Glycolen beschrieben, die zur Abtrennung von Methanol aus organischen Flüssigkeiten geeignet ist.

Der technische Einsatz der nach dem Stand der Technik bekannten Membranen für die Abtrennung von leichten Alkoholen aus organischen Gemischen ist allerdings stark beschränkt. Celluloseacetat ist in vielen organischen Lösemitteln, wie Äthern, Ketonen und mehrwertigen Alkoholen löslich, in Kontakt mit anderen Lösemitteln quillt es teilweise so stark, daß die Membranen zerstört werden. Membranen mit Festionen ändern ihr Verhalten sehr stark, wenn sie mit Wasser oder Salzen in Berührung kommen. PVA-Membranen brauchen einen gewissen Wassergehalt im Zulaufgemisch, andernfalls geht ihr Fluß für Alkohole stark zurück.

Die JP-A-63 291620 beschreibt eine Membran mit einer Trennschicht aus Polydimethylaminoethylmethacrylat und ihre Verwendung zur Abtrennung von Sauerstoff oder Kohlendioxid aus Gasgemischen.

Es hat sich in überraschender Weise gezeigt, daß Membranen hergestellt werden können, deren Verwendung nach der vorliegenden Erfindung gleichzeitig gute Selektivitäten und Flüsse bei der Abtrennung von einfachen Alkoholen wie Methanol und Propanol und insbesondere Äthanol aus den Gemischen mit anderen organischen Flüssigkeiten zeigt. Die Membranen zeigen besonders eine gute chemische Stabilität bei erhöhten Temperaturen in technisch wichtigen Gemischen von einfachen Alkoholen mit aliphatischen und aromatischen Kohlenwasserstoffen, Äthern, Ketonen, Estern und höheren Alkoholen. Selektivität und Fluß für Alkohole sind auch bei Abwesenheit von Wasser hoch.

Die vorliegende Erfindung betrifft somit die Anwendung von Membranen zur Abtrennung von einfachen Alkoholen aus ihren Gemischen mit anderen organischen Komponenten mittels Pervaporation und Dämpfepermeation.

Die Trennschicht der nach der vorliegenden Erfindung verwendeten Membran besteht aus einem Film aus einem Homo-, Co- oder Terpolymeren. Als Homopolymer wird Poly-N-N-dimethylaminoethyl-methacrylat (Poly-DMAEMA) verwendet, als Copolymer ein solches aus DMAEMA und N-Vinylpyrrolidon (NVP) oder aus DMAEMA und N-Vinylcaprolactam (NVCL) und als Terpolymer ein solches aus DMAEMA, NVP und NVCL. Besonders bevorzugt sind solche Polymere, in denen das Stickstoffatom der Aminogruppe des DMAEMA als quarternäres Ammoniumion vorliegt. Bevorzugte Quarternierungsagentien sind Dimethylsulfat und Diäthylsulfat sowie Monochlormethan und Monochloräthan, Monojod- und Monombrom -Methan und -Äthan.

Bezeichnet man den molaren Anteil von DMAEMA mit x, den von NVP mit y und den von NVCL mit z und normiert so, daß $x + y + z = 1$ ist, so kann der Wert von x zwischen 1 (Homopolymerisat) und 0,1 betragen, die Werte von y und z liegen zwischen 0 und 0,9. Für das Copolymere ($z = 0$ oder $y = 0$) sind für x Werte zwischen 0,2 und 0,8 bevorzugt, besonders bevorzugt sind Werte zwischen 0,4 und 0,6. Für das Terpolymere sind für x, y und z Werte zwischen 0,2 und 0,5 bevorzugt.

Das mittlere Molgewicht des Homo-, Co- und Terpolymer kann in weiten Bereichen, zwischen 50 000 und 5 000 000 Dalton schwanken, wobei mittlere Molekulargewichte zwischen 100 000 und 1 000 000 Dalton bevorzugt sind.

Zur Herstellung der Trennschicht wird das Homopolymere, Co- oder Terpolymere in Wasser, Äthanol oder Wasser-Äthanol-Mischungen gelöst. Je nach Molekulargewicht des Polymeren sind Konzentrationen zwischen 2 Gew% und 50 Gew% bevorzugt, besonders bevorzugt sind Konzentrationen zwischen 4 Gew% und 20 Gew%. Die Lösung wird mittels einer dem Fachmann bekannten Methode auf einer Unterlage verteilt, wobei sich ein fehlstellenfreier Flüssigkeitsfilm bildet. Aufsprühen oder Transfercoating sind die bevorzugten Anftragungsmethoden. Nach dem Verdampfen des Lösungsmittels bildet sich ein porenfreier, dichter Polymerfilm, dessen Dicke von der Viskosität der Polymerlösung und der Auftragungsmethode abhängt. Dicken des Polymerfilms zwischen 0,5 µm und 20 µm sind bevorzugt, solche von 1 µm bis 5 µm sind besonders bevorzugt.

Die Verdampfung des Lösungsmittels erfolgt vorzugsweise bei 50°C bis 100°C. Anschließend wird der Film durch Wärmebehandlung vernetzt, vorzugsweise bei Temperaturen von 100°C bis 200°C, besonders bevorzugt 120°C - 160°C, in Zeiten zwischen 1 min. bis 60 min. Als vorteilhaft hat sich erwiesen, die Wärmebehandlung in mehreren Stufen durchzuführen, wobei ein zweistufiges Vorgehen bevorzugt ist, so daß nach der Verdampfung des Lösungsmittels zunächst z.B. 1 bis 30 min. bei 100°C bis 120°C behandelt wird, in einer zweiten Stufe z.B. 1 bis 30 min. lang bei 110°C bis 200°C. Durch die Wärmebehandlung wird der Polymerfilm unlöslich in Wasser und Äthanol.

Die nach der vorliegenden Erfindung verwendeten Membran kann allein aus der porenfreien Trennschicht bestehen. Bevorzugt befindet sich die porenfreie Trennschicht auf einer porösen Stützschicht.

Als besonders vorteilhaft hat sich erwiesen, den Polymerfilm als Trennschicht auf eine Komposit-Struktur aufzubringen. Solche Kompositstrukturen oder Kompositmembranen sind dem Fachmann bekannt. Sie bestehen aus einer Trägerschicht, z.B. einem Vlies oder Gewebe aus Polyester, Polypropylen, Polyäthylen, Polyamid, Polyphenylensulfid, Polysulfon oder anderen Polymeren, aus Metall, Glas oder Kohlenstoff. Auf dieser Trägerschicht befindet sich eine poröse Stützschicht mit asymmetrischer Porenstruktur, wobei Stützschichten aus Polyacrylnitril, Polysulfon, Polyvinylidendifluorid, Polyamid, Cellulose und Polyetherimid bevorzugt sind. Dem Fachmann sind darüber hinaus auch andere Träger- und Stützschichten bekannt. Auf die poröse Stützschicht wird in einer dem Fachmann bekannten Weise die porenfreie Schicht als eigentliche Trennschicht der Membran aufgebracht.

Die folgenden Beispiele erläutern die Erfindung:

**Beispiel 1:**

Auf eine poröse Stützschicht aus Polyacrylnitril (PAN), die eine asymmetrische Porenstruktur aufweist und ihrerseits auf eine Trägerschicht aus einem Polyestervlies aufgebracht ist, wird eine Lösung von 7 Gew% Polydimethyl-aminoethylmethacrylat (DMAEMA) in einer Mischung von Wasser und Äthanol im Verhältnis 1:1 durch Sprühen aufgetragen. Das Lösungsmittel wird in 2 min. bei 80°C verdampft. Nach dem Verdampfen des Lösemittels wird die Membran für 15 min. bei 150°C wärmebehandelt. Die Trennschicht der fertigen Membran hat eine Dicke von 3 µm. In einem Pervaporationsversuch wird sie mit einem Zulaufgemisch aus 20 Gew% Äthanol und 80 Gew% Äthyltertiärbutyläther (ETBE) bei 60°C getestet. Es wird ein Permeat von 98,2 Gew% Äthanol erhalten, der Fluß beträgt 0,92 kg/m$^2$.h bei einem permeatseitigen Druck von 6 mbar, das Permeat wird durch Kühlung mit einem Trockeneis-Ethanol-Gemisch kondensiert.

**Beispiel 2:**

Auf die gleiche Unterstruktur wie in Beispiel 1 wird eine Lösung eines Copolymeren aus N-Vinylpyrrolidon und DMAEMA aufgetragen. Das molare Verhältnis der beiden Monomeren im Copolymeren beträgt 1 : 1, es wird eine Lösung von 10 Gew% des Copolymeren in Wasser benutzt. Nach dem Auftrag wird das Lösungsmittel in 2 min. bei 90°C verdampft, anschließend 30 min. bei 125°C wärmebehandelt. Ein Pervaporationsversuch mit einem Zulauf von 75 Gew% ETBE und 25 Gew% Äthanol ergibt bei 95°C einen Fluß von 6,2 kg/m$^2$.h, das Permeat besteht zu 94,7 Gew% aus Äthanol. Der permeatseitige Druck beträgt 20 mbar, die Kondensation des Permeats erfolgt bei 0° C.

**Beispiel 3:**

Auf eine poröse Unterstruktur aus Polyvinyldifluorid (PVDF) auf einem Träger aus einem Polyphenylensulfid (PPS)-Vlies wird eine Lösung aus einem Copolymeren aus NVP und DMAEMA aufgetragen. Die Aminogruppe des DMAEMA ist mit Diäthylsulfat quarterniert, das molare Verhältnis von NVP und quarternierten DMAEMA beträgt 3:2, es wird eine Lösung von 4,5 % des Copolymeren in Wasser verwendet. Nach dem Auftrag wird das Lösungsmittel in 2 min. bei 80°C verdampft und die Membrane zunächst 10 min. bei 115°C und danach 5 min. bei 150°C wärmebehandelt. Im Pervaporationstest mit 20 Gew% Äthanol und 80 Gew% Toluol wird ein Permeat von 98,8 % Äthanol erhalten, bei 80°C beträgt der Fluß 2,5 kg/m$^2$.h, der permeatseitige Druck beträgt 10 mbar, das Permeat wird bei 0° C kondensiert.

**Beispiel 4:**

Auf die PAN-Unterstruktur wie in Beispiel 1 wird eine Lösung eines Terpolymeren aus N-Vinylcaprolactam, NVP und DMAEMA, letzteres mit Methylchlorid quarterniert, aufgetragen als Lösung von 5 Gew% in Wasser. Das molare Verhältnis von NVCl, NVP und DMAEMA beträgt 0.3 : 0.3 : 0.4. Nach Verdampfung des Lösemittels in 0,5 min. bei 95°C wird 10 min. bei 120°C und anschließend 8 min. bei 145°C wärmebehandelt. Im Pervaporationstest mit 20 % Äthanol und 80 % n-Heptan wird bei 50°C ein Permeat mit 99,2 Gew% Äthanol erhalten, der Fluß beträgt 1,8 kg/m$^2$.h, der permeatseitige Druck beträgt 5 mbar, das Permeat wird mit Trockeneis-Ethanol kondensiert.

**Beispiel 5:**

Eine Membran nach Beispiel 4 ergibt im Pervaporationstest mit einer Mischung aus 5 % Methanol und 95 % n-Heptan bei 55°C ein Permeat von 99,8 % Methanol und einen Fluß von 2,3 kg/m$^2$.h. Unter gleichen Bedingungen wird mit einen Zulauf aus 10 % Propanol-2 und 90 % n-Heptan ein Permeat von 92, 7 % Propanol-2 erhalten, der Fluß beträgt 0,8 kg/m$^2$.h. Bei beiden Versuchen beträgt der permeatseitige Druck 5 mbar, das Permeat wird durch Kühlung mit Trockeneis-Ethanol kondensiert.

**Patentansprüche**

1. Verwendung einer Membran mit einer porenfreien Trennschicht bestehend aus Polydimethylaminoethylmethacrylat-Homo-polymeren oder N-Vinylpyrrolidon-Dimethylaminoethyl-methacrylat-Copolymer oder N-Vinylcaprolactam-Dimethylaminoethyl-methacrylat-Copolymer oder N-Vinylcaprolactam-N-Vinylpyrrolidon-Dimethylaminoethyl-methacrylat-Terpolymeren, zur Abtrennung einfacher Alkohole aus ihren Mischungen mit anderen organischen Fluiden mittels Pervaporation oder Dampfpermeation.

2. Verwendung einer Membran nach Anspruch 1, dadurch gekennzeichnet, daß der durch die Membran permeierende Alkohol Methanol, Ethanol oder ein Propanol ist, und daß die von der Membran zurückgehaltene Substanz ein aliphatischer oder aromatischer Kohlenwasserstoff, ein Ether, Keton, Ester oder höherer Alkohol ist oder ein Gemisch von mindestens zwei Substanzen dieser Gruppe.

3. Verwendung einer Membran nach Anspruch 2, dadurch gekennzeichnet, daß der durch die Membran permeierende Alkohol Ethanol und die zurückgehaltene Substanz Ethyl-tertiär-butylether ist.

4. Verwendung einer Membran nach einem der Ansprüche 1 bis 3, dadurch gekennzeichnet, daß die Aminogruppe des Dimethylaminoethylmethacrylates quarterniert ist.

5. Verwendung einer Membran nach Anspruch 4, dadurch gekennzeichnet, daß die Quarternierung mittels Monohalogenmethan und Monohalogenethan erfolgt.

6. Verwendung einer Membran nach Anspruch 4, dadurch gekennzeichnet, daß die Quarternierung durch Schwefelsäuremonomethylester, -ethylester, Schwefelsäuredimethylester oder -ethylester erfolgt.

7. Verwendung einer Membran nach einem der Ansprüche 1 bis 3, dadurch gekennzeichnet, daß die porenfreie Trennschicht sich auf einer porösen Stützschicht befindet, die sich ihrerseits auf einer porösen Trägerschicht befindet.

8. Verwendung einer Membran nach Anspruch 7, dadurch gekennzeichnet, daß zur Herstellung der Membran eine Lösung des Homo-, Co- oder Terpolymeren in Wasser, Ethanol, oder Ethanol-Wasser-Gemischen auf eine poröse Unterstruktur mit asymmetrischer Porenstruktur aufgetragen wird, die ihrerseits einer Trägerschicht aufliegt.

9. Verwendung einer Membran nach Anspruch 8, dadurch gekennzeichnet, daß nach dem Auftrag der Polymerlösung das Lösungsmittel verdampft wird und die Membran einer Wärmebehandlung unterworfen wird.

10. Verwendung einer Membran nach Anspruch 9, dadurch gekennzeichnet, daß die Wärmebehandlung bei Temperaturen zwischen 100°C und 200°C, vorzugsweise 120°C bis 160°C, in 1 min. bis 60 min., vorzugsweise 5-30 min., erfolgt.

11. Verwendung einer Membran nach Anspruch 10, dadurch gekennzeichnet, daß die Wärmebehandlung in einer oder mehreren Stufen, vorzugsweise in zwei Stufen erfolgt, wobei die Temperatur der folgenden Stufe höher ist als die Temperatur der vorhergehenden Stufe.

**Claims**

1. Use of a membrane comprising a pore-free separation layer consisting of poly-dimethyl aminoethyl methacrylate homopolymers, N-vinylpyrrolidone dimethyl aminoethyl methacrylate copolymer, N-vinylcaprolactam dimethyl aminoethyl methacrylate copolymer, or N-vinylcaprolactam N-vinylpyrrolidone dimethyl aminoethyl methacrylate terpolymer, for the separation of simple alcohols from their mixtures with other organic fluids by pervaporation or vapor permeation.

2. Use of a membrane according to claim 1, characterized in that the alcohol permeating the membrane is methanol, ethanol, or a propanol, and that the other substance retained by the membrane is an aliphatic or aromatic hydrocarbon, an ether, ketone, ester or higher alcohol or a mixture of at least two thereof.

3. Use of a membrane according to claim 2, characterized in that the alcohol permeating the membrane is ethanol and the other substance retained is ethyl tertiary butyl ether.

4. Use of a membrane according to any of claims 1 to 3, characterized in that the amino group of said dimethyl aminoethyl methacrylate is quaternized.

5. Use of a membrane according to claim 4, characterized in that said amino group is quaternized with monohalomethane and monohaloethane.

6. Use of a membrane according to claim 4, characterized in that said amino group is quaternized with mono methyl sulfate, mono ethyl sulfate, dimethyl sulfate, or diethyl sulfate.

7. Use of a membrane according to any of claims 1 to 3, characterized in that the pore-free layer is located on a porous support layer, which in turn, is located on a porous substrate layer.

8. Use of a membrane according to claim 7, characterized in that for the manufacturing of the membrane homo-, co- or terpolymers are applied as water, ethanol, or ethanol and water mixture solutions to a porous substructure having an asymmetrical pore structure which, in turn, lies on a substrate layer.

9. Use of a membrane according to claim 8, characterized in that after application of the polymer solution, the solvent is evaporated and the membrane is subjected to heat-treatment.

10. Use of a membrane according to claim 9, characterized in that the heat-treatment is carried out at temperatures ranging from 100 °C to 200 °C, preferably from 120 °C to 160 °C, within 1 minute to 60 minutes, preferably within 5 to 30 minutes.

11. Use of a membrane according to claim 10, characterized in that said heat-treatment is carried out in one or more steps, preferably in two steps, wherein the temperature of the following step is higher than the temperature of the preceding step.

**Revendications**

1. Utilisation d'une membrane comportant une couche de séparation exempte de pores, constituée d'homopolymères de poly(méthacrylate de diméthylaminoéthyle) ou d'un copolymère N-vinylpyrrolidone-méthacrylate de diméthylaminoéthyle ou d'un copolymère N-vinylcaprolactameméthacrylate de diméthylaminoéthyle ou de terpolymères N-vinylcaprolactame-N-vinylpyrrolidone-méthacrylate de diméthylaminoéthyle, pour séparer des alcools simples d'avec leurs mélanges avec d'autres fluides organiques, par pervaporation ou perméation de vapeur.

2. Utilisation d'une membrane selon la revendication 1, caractérisée en ce que l'alcool destiné à traverser la membrane est le méthanol, l'éthanol ou un propanol, et que la substance retenue par la membrane est un hydrocarbure aliphatique ou aromatique, un éther, une cétone, un ester ou un alcool supérieur, ou un mélange d'au moins deux substances de ce groupe.

3. Utilisation d'une membrane selon la revendication 2, caractérisée en ce que l'alcool qui doit traverser la membrane est l'éthanol, et la substance retenue est l'oxyde d'éthyle et de tert-butyle.

4. Utilisation d'une membrane selon l'une des revendications 1 à 3, caractérisée en ce que le groupe amino du méthacrylate de diméthylaminoéthyle est quaternisé.

5. Utilisation d'une membrane selon la revendication 4, caractérisée en ce que la quaternisation est réalisée avec un monohalogénométhane ou un monohalogènéthane.

6. Utilisation d'une membrane selon la revendication 4, caractérisée en ce que la quaternisation est réalisée par le sulfate de monométhyle, de monoéthyle, de diméthyle ou de diéthyle.

7. Utilisation d'une membrane selon l'une des revendications 1 à 3, caractérisée en ce que la couche de séparation exempte de pores se trouve sur une couche d'appui poreuse, qui pour sa part se trouve sur une couche support poreuse.

8. Utilisation d'une membrane selon la revendication 7, caractérisée en ce que, pour préparer la membrane, on applique une solution de l'homo-, du coou des terpolymères dans l'eau, l'éthanol ou des mélanges d'éthanol et d'eau, sur une structure de base poreuse ayant une structure asymétrique des pores, et qui pour sa part est disposée sur une couche support.

9. Utilisation d'une membrane selon la revendication 8, caractérisée en ce que, après application de la solution de polymère, le solvant est évaporé et la membrane est soumise à un traitement thermique.

10. Utilisation d'une membrane selon la revendication 9, caractérisée en ce que le traitement thermique est réalisé à des températures comprises entre 100 et 200°C, de préférence entre 120 et 160°C, pendant 1 à 60 minutes et de préférence pendant 5-30 minutes.

11. Utilisation d'une membrane selon la revendication 10, caractérisée en ce que le traitement thermique est réalisé en une ou plusieurs étapes, de préférence en deux étapes, la température de l'étape suivante étant supérieure à la température de l'étape précédente.